# FASCICULE DE BREVET EUROPEEN

(11) **EP 4 639 882 B1**
(45) Date de publication et mention de la délivrance du brevet: **11.03.2026**
(21) Numéro de dépôt: 25700009.1
(22) Date de dépôt: 08.01.2025
(51) Int. Cl.: H04M 1/72409

(54) **DISPOSITIF INTELLIGENT COMMUNIQUANT PAR ÉMISSION LUMINEUSE**
INTELLIGENTE VORRICHTUNG ZUR KOMMUNIKATION DURCH LICHTEMISSION
SMART DEVICE COMMUNICATING BY LIGHT EMISSION

(30) Priorité: 15.01.2024 FR 2400359
(43) Date de publication de la demande: 29.10.2025
(73) Titulaire: SPKTRL, 75001 Paris (FR)
(72) Inventeur: DE LASTEYRIE, Katia, 75001 Paris (FR)
(74) Mandataire: LLR
(86) Numéro de dépôt international: PCT/EP2025/050368
(87) Numéro de publication internationale: WO 2025/153371

(56) Documents cités:
- WO-A1-2017/156633
- WO-A1-2022/097148
- WO-A2-2014/130946
- US-A1- 2016 248 865

## Description

L'invention concerne la communication entre un dispositif et un utilisateur. Elle concerne en particulier la sollicitation d'un utilisateur par un dispositif sous la forme d'une émission lumineuse.

La multiplication des dispositifs connectés, tels que les smartphones, et des applications développées pour ces dispositifs, rend leurs utilisateurs constamment informés, font d'eux l'objet de requêtes, et les rend disponibles à tout type d'interaction. Cela se matérialise à travers diverses sollicitations émises par les dispositifs et formées par des messages, des notifications visuelles ou sonores, des appels. Ces sollicitations sont la source d'interruptions, d'une surinformation et d'une saturation sensorielle ayant un impact significatif sur la concentration et la productivité, ainsi que sur la santé physique, psychique et cognitive. En particulier, concernant la santé, on identifie entre autres des impacts sur la sédentarité, la vue, le sommeil, l'alimentation, l'anxiété, la dépression, la mémoire, les troubles de l'attention et sur la baisse générale de l'intelligence.

On connaît déjà dans l'état la technique des applications, pour des dispositifs connectés, dédiées à la modération des usages numériques, et des dispositifs aux fonctionnalités volontairement limitées, par exemple le retour aux téléphones dits « 9 touches », pour diminuer la fréquence et/ou le nombre des sollicitations. Cependant, ces solutions empêchent l'utilisateur de recevoir certaines sollicitations qu'il aurait jugées pertinentes au moment où elles lui étaient destinées. En outre, elles n'ont bien souvent pour résultat que de retarder dans le temps le flux de sollicitations que finira par subir l'utilisateur.

On connaît également de l'état de la technique les documents WO2014130946 et WO2017156633 qui divulguent des dispositifs générant des émissions lumineuses à un utilisateur en fonction de sollicitations reçues. Cependant, ces dispositifs ne permettent pas d'adapter de manière simple les contenus des émissions lumineuses aux utilisateurs et à leurs usages propres.

L'invention a notamment pour but de diminuer le bruit informationnel généré par les sollicitations reçues par l'utilisateur d'un dispositif. Elle a également pour but d'adapter le contenu de l'émission lumineuse à l'utilisateur.

À cet effet, l'invention a pour objet un procédé de communication par émission lumineuse avec un utilisateur, comprenant les étapes suivantes :
- par communication sans fil, envoi, d'un premier dispositif à un deuxième dispositif, d'une sollicitation destinée à l'utilisateur,
- préparation d'un contenu d'une émission lumineuse formée en fonction de la sollicitation, le contenu de l'émission lumineuse comprenant un motif et au moins une teinte de l'émission lumineuse, le motif étant composé d'une ou plusieurs luminosités et/ou saturations de l'émission lumineuse évoluant dans le temps, le motif et la ou les teintes étant déterminés par un modèle d'intelligence artificielle entraîné à partir de commandes passées de l'utilisateur en réponse à des émissions correspondantes passés et aux sollicitations correspondantes passées,
- génération de l'émission lumineuse, par le deuxième dispositif, à l'intention de l'utilisateur,
- réception, par le deuxième dispositif, d'une commande de l'utilisateur en réponse à l'émission lumineuse.

Ainsi, au lieu de solliciter l'utilisateur par des messages, notifications, alertes, appels, le premier dispositif envoie cette sollicitation à un deuxième dispositif qui génère une émission lumineuse formée en fonction de la sollicitation.

Par « sollicitation destinée à un utilisateur », on désigne notamment un signal portant sur un message, une notification, une alerte, un appel, visant l'utilisateur des deux dispositifs, que l'utilisateur ne recevrait d'ordinaire que de façon graphique et/ou sonore par le premier dispositif. À titre d'exemple, la sollicitation peut porter sur un « sms » reçu par le premier dispositif. La sollicitation peut avoir été créée directement par le premier dispositif, par exemple lorsqu'il s'agit d'une notification d'événement enregistrée dans un calendrier, ou avoir été transmise au préalable par un dispositif tiers au premier dispositif. On désigne également un signal portant sur un message, une notification, un appel, visant l'utilisateur du deuxième dispositif mais pas nécessairement celui du premier dispositif. Le premier dispositif peut par exemple être un dispositif porté par un tiers et envoyant une sollicitation au deuxième dispositif en vue de solliciter l'utilisateur.

La sollicitation transmise peut être un signal radio, par exemple un signal envoyé conformément au protocole Bluetooth, un signal infrarouge, un signal LiFi ou d'autres types de signaux. Dans le cas où le premier dispositif dispose lui aussi d'un émetteur de lumière, la sollicitation transmise peut être une émission lumineuse émise du premier dispositif au deuxième dispositif, qui génère à son tour une émission lumineuse à l'intention de l'utilisateur.

Par « contenu d'émission lumineuse », on désigne la forme de l'émission lumineuse, en particulier la ou les teintes émises, leur luminosité et leur saturation, et le motif de l'évolution, c'est-à-dire la manière dont la teinte, la luminosité et/ou la saturation évoluent, généralement en quelques secondes et éventuellement de façon répétitive, pour transmettre une signification. En cas de plusieurs émetteurs présents sur le deuxième dispositif, le contenu de l'émission lumineuse désigne également la manière dont les émetteurs sont coordonnés pour émettre plusieurs émissions fondées sur la même sollicitation. L'émission lumineuse porte nécessairement sur une couleur, le terme de « couleur » incluant le blanc et le noir.

Par « préparation d'un contenu d'émission lumineuse », on désigne l'étape de détermination de la ou des teintes à émettre, de leur luminosité et leur de saturation, et de leur éventuelle évolution dans le temps, en fonction de la sollicitation. Le modèle d'intelligence artificielle apprend à générer un contenu de l'émission lumineuse en fonction des retours de l'utilisateur à des émissions lumineuses précédentes. Par exemple, l'utilisateur peut indiquer n'avoir pas compris une émission lumineuse, ou avoir estimé que son contenu, c'est-à-dire sa teinte et/ou son motif, n'est pas pertinent vis-à-vis de la sollicitation sur laquelle elle porte. Le modèle améliore donc la précision de l'émission lumineuse en fonction de la sollicitation sur laquelle elle porte.

Le modèle d'intelligence artificielle peut-être stocké entièrement ou en partie par le deuxième dispositif, générant le contenu en fonction de la sollicitation reçue. Il peut être alternativement stocké tout ou en partie par le premier dispositif, générant alors directement le contenu sur la base d'une sollicitation que ce premier dispositif a créée ou qu'il reçoit d'un dispositif tiers. Il peut également être stocké tout ou en partie sur un serveur tiers, en particulier une plateforme CLOUD, de façon à générer le contenu avant transmission au deuxième dispositif. Ce modèle peut également être réparti sur plusieurs de ces éléments.

Par « émission lumineuse formée en fonction de la sollicitation », on désigne le fait que le contenu de l'émission lumineuse dépend directement du type et du contenu de la sollicitation. C'est en transformant une sollicitation en émission lumineuse que l'on diminue le bruit informationnel.

L'émission lumineuse vise à compresser la sollicitation pour la rendre plus simple à traiter par l'utilisateur. En effet, l'émission lumineuse implique l'émission d'une couleur visible nettement par l'utilisateur. La couleur fournit une information à l'utilisateur qu'il comprend rapidement sans qu'il n'ait d'effort à fournir. Il est ainsi connu d'utiliser la couleur dans les systèmes d'alertes, par exemple dans les tableaux de bords de véhicule automobiles, marins ou dans les avions, où les teintes sont directement associées, dans le cerveau humain, à des niveaux de sécurité ou de danger.

La couleur est ainsi un choix de communication fondé sur la physiologie humaine, comme expliqué dans les paragraphes qui suivent.

Il a été décrit que la couleur soutient plusieurs étapes du modèle C-HIP (pour « *Communication-Human Information Processing* »)*,* un modèle concernant le traitement de l'information humaine en communication, en particulier quand il est appliqué aux avertissements (Wogalter, 2006). La couleur soutient notamment le changement initial d'attention de son destinataire, la compréhension, la mémorisation.

Des études (*Young ,* 1991, *Laughery and al,* 1933) ont montré que la couleur entrainait des temps de réponse plus rapides que d'autres formes de communication.

La couleur joue également un rôle dans l'attention sélective humaine. Cette attention sélective est l'allocation de ressources attentionnelles que le système visuel humain accorde à l'environnement, face à l'immensité et à la complexité des informations visuelles reçues (Chun, Golomb, Turk-Browne, 2011). On peut considérer que peu de ressources attentionnelles sont nécessaires au traitement d'émissions lumineuses vis-à-vis d'autres des ressources nécessaires à d'autres formes d'informations visuelles.

La théorie de la couleur dans le contexte (*Color-in-Context theory,* ou CIC) traite du fait de communiquer par couleur des significations et des associations contenant des informations importantes. Ces significations et associations sont enracinées dans des prédispositions humaines basées sur l'apprentissage et/ou biologiques. Cette théorie enseigne notamment que la couleur suscite des processus comportementaux automatiques.

La génération d'une émission lumineuse par le deuxième dispositif permet donc de rendre compte à l'utilisateur de sollicitations destinées à son intention en diminuant les ressources nécessaires à son attention et donc en le perturbant moins qu'une sollicitation conventionnelle.

En outre, l'étape de réception d'une commande permet d'obtenir le retour de l'utilisateur sur cette émission lumineuse. Ce retour s'ajoute aux retours précédents de l'utilisateur à des émissions lumineuses correspondantes précédentes. Petit à petit, le modèle d'intelligence artificielle apprend à améliorer la pertinence des contenus des émissions lumineuses en fonction de ces retours.

Pour l'utilisateur, il s'agit par exemple de répondre rapidement à une question formulée via l'émission lumineuse, ou de valider une proposition présentée via l'émission lumineuse. Il s'agit également de demander à ignorer une sollicitation, ou de demander de la représenter ultérieurement, voire de l'archiver. Le processus initié par l'émission lumineuse est moins perturbant que le processus initié par une sollicitation conventionnelle, de sorte que le retour est réalisé de manière plus efficace. Cette étape de réception désigne également la possibilité pour l'utilisateur de formuler un retour sur l'émission lumineuse elle-même, par exemple sa compréhension, sa pertinence dans un contexte déterminé.

Par conséquent, le bruit informationnel généré par les sollicitations conventionnelles est diminué. En outre, grâce au modèle d'intelligence artificielle entraîné, le contenu de l'émission est particulièrement adapté aux usages propres de l'utilisateur.

Suivent d'autres caractéristiques optionnelles prises seules ou en combinaison.

Avantageusement, le modèle d'intelligence artificielle identifie, par entraînement, des contenus d'émissions lumineuses permettant de susciter l'attention de l'utilisateur, en particulier en fonction de réponses cardiaques et/ou de mouvements détectés de l'utilisateur suite à des émissions lumineuses correspondantes passées.

Ainsi, pour un utilisateur spécifique, les combinaisons de teintes et motifs, des émissions lumineuses passées, sont intégrées à une base d'apprentissage et associées aux variations de fréquence cardiaques et mouvements de l'utilisateur, y compris sa réactivité, mesurées suite à ces émissions, de manière à ce que le modèle d'intelligence artificielle apprenne à former des contenus d'émissions lumineuses qui améliorent la réactivité de l'utilisateur.

D'autres critères peuvent naturellement être pris en compte à cet effet.

De préférence, le modèle d'intelligence artificielle identifie, par entraînement, des sollicitations et/ou des contextes de sollicitations stressants pour l'utilisateur, de manière à identifier un ou des critères de filtrage de ces sollicitations, en particulier en fonction de réponses cardiaques et/ou de mouvements détectés de l'utilisateur suites à des émissions lumineuses correspondantes passées.

Ainsi, le modèle d'intelligence artificielle identifie des contextes durant lesquels certaines sollicitations ne doivent pas être transmises. À titre d'exemple, le modèle d'intelligence apprend qu'une notification d'une application bancaire concernant un découvert bancaire de l'utilisateur ne doit pas être transmise durant une réunion stratégique de l'utilisateur. Un autre exemple est que le modèle apprend qu'aucune notification ne doit être transmise durant un contexte de conduite d'un véhicule.

De manière préférée, le modèle d'intelligence artificielle identifie, quantifie et qualifie des déclencheurs de stress et l'impact de notifications sur un niveau de stress et les comportements de l'utilisateur qui en résultent.

Le modèle apprend donc à moduler le stress de l'utilisateur, en identifiant un équilibre entre nécessité d'informer l'utilisateur à certains moments et nécessité de ne pas stresser indûment l'utilisateur.

La combinaison de l'identification des facteurs de stress et des contenus permettant de susciter l'attention de l'utilisateur permet d'optimiser à la fois les contenus et les moments des émissions lumineuses.

Cette combinaison permet notamment de proposer à l'utilisateur des modes de fonctionnement au choix : par exemple un mode dit 'croisière' où l'objectif est en priorité de ne pas générer du stress chez l'utilisateur, et un mode 'performance ' où l'objectif est en priorité de susciter l'attention de l'utilisateur.

Avantageusement, la sollicitation concerne l'un des types d'éléments suivants :
- un appel reçu par le premier dispositif à l'intention de l'utilisateur ;
- un message reçu par le premier dispositif à l'intention de l'utilisateur ;
- une notification du premier dispositif à l'intention de l'utilisateur et portant par exemple sur un événement, une localisation, un moment ou une activité.

Ainsi, alors que ces éléments sont traditionnellement transmis à l'utilisateur par une alerte sonore, une vibration ou l'affichage d'une alerte sur un écran, ici le premier dispositif ne transmet pas la sollicitation de cette manière à l'utilisateur. À la place, il transmet la sollicitation à un deuxième dispositif, par communication sans fil.

De préférence, le contenu de l'émission lumineuse comprenant un motif de l'émission lumineuse, le motif étant composé d'une ou plusieurs luminosités et/ou saturations de l'émission lumineuse évoluant dans le temps, ce motif de l'émission lumineuse correspond à un degré de priorité de la sollicitation destinée à l'utilisateur.

Ainsi, la variation de luminosité et/ou saturation de l'émission lumineuse indique un niveau de priorité de la sollicitation. Cela permet à l'utilisateur de comprendre facilement s'il doit étudier rapidement la sollicitation ou non. Le fait de catégoriser les sollicitations par niveau de priorité permet de moins perturber l'utilisateur, qui peut ignorer une sollicitation si son niveau de priorité est faible. Le fait de transmettre ce degré de priorité à travers une émission lumineuse s'appuie sur les effets sur la physiologie humaine de ce type de sollicitation : l'utilisateur comprend rapidement et sans effort le sens du motif, ce qui diminue le niveau de perturbation de l'utilisateur malgré la sollicitation.

Avantageusement, le contenu de l'émission lumineuse comprenant au moins une teinte de l'émission lumineuse, cette teinte correspond à une catégorie de sujets concernée par la sollicitation destinée à l'utilisateur.

Ainsi, l'utilisateur comprend sans effort et rapidement à quel sujet fait référence la sollicitation, sans avoir à l'étudier, c'est-à-dire à lire un message ou écouter un enregistrement. Là encore, le niveau de perturbation de l'utilisateur est diminué.

Avantageusement, le contenu de l'émission lumineuse correspond à un ou plusieurs mots-clefs.

Ainsi, une teinte et /ou un motif peuvent correspondre à un ou des mots prédéterminés tels que « urgence » ou « découvert ».

De préférence, le procédé comprend, avant l'étape de génération l'émission lumineuse, une étape de filtrage, l'étape de génération de l'émission lumineuse n'étant mise en œuvre que lorsqu'il est déterminé à l'étape de filtrage que la sollicitation est pertinente pour l'utilisateur.

Ainsi, l'utilisateur n'est sollicité que lorsque la sollicitation passe avec succès l'étape de filtrage. Certaines sollicitations ne lui sont donc pas transmises, ce qui diminue d'autant les perturbations de l'utilisateur.

Avantageusement, des critères de filtrage sont déterminés par le modèle d'intelligence artificielle entraîné à partir des commandes passées de l'utilisateur en réponse à des émissions lumineuses correspondantes passées et aux sollicitations correspondantes passées.

Ainsi, le modèle d'intelligence artificielle est régulièrement mis à jour, en particulier sur les serveurs d'une plateforme CLOUD, ou sur le premier ou deuxième dispositif, ou à travers une combinaison de ces appareils. Cette mise à jour, c'est-à-dire l'entrainement du modèle sur une base d'apprentissage complétée au fur et à mesure, est réalisé sur la base des interactions passées entre l'utilisateur et les émissions lumineuses de son dispositif. De cette façon, les prochaines sollicitations lui sont transmises uniquement si, au vu de ses précédents retours, il est estimé qu'elles sont pertinentes pour lui.

De préférence, les critères de filtrage concernent au moins l'un des éléments suivants :
- un type d'élément sur lequel porte la sollicitation, par exemple parmi les types d'éléments énumérés plus haut ;
- la sollicitation étant un message ou une notification reçue par le premier dispositif à l'intention de l'utilisateur, un contenu du message ou de la notification ;
- un moment de réception de la sollicitation par le deuxième dispositif ;
- un lieu où se trouve le deuxième dispositif ;
- une activité en cours de l'utilisateur identifiée par le deuxième dispositif.

Ainsi, ces critères de filtrage concernent un contexte durant lequel la sollicitation est émise au deuxième dispositif. Le modèle d'intelligence artificielle apprend donc à filtrer les sollicitations en fonction des retours de l'utilisateur à des émissions lumineuses précédentes et dans des contextes précis. Il en résulte qu'en fonction d'un contexte spécifique, une émission lumineuse portant sur la sollicitation peut être émise ou non vers l'utilisateur.

De préférence, la commande de l'utilisateur indique un niveau de pertinence de l'émission lumineuse générée à son intention, de préférence un niveau de pertinence parmi les suivants :
- émission non pertinente ;
- émission pertinente ;
- émission non pertinente de par le contexte durant lequel elle a été générée, le contexte étant par exemple défini par des données de moment et/ou de localisation et/ ou d'activité en cours de l'utilisateur.

Ainsi, c'est en fonction de cette commande de l'utilisateur en réponse à une émission lumineuse qu'il est envisageable d'améliorer la pertinence des futures émissions lumineuses. En particulier, le modèle d'intelligence artificielle est mis à jour en fonction de ces réponses, et améliore donc les critères de filtrage des sollicitations et/ ou le contenu des futures émissions portant sur ces sollicitations, en fonction de ces retours.

Avantageusement, la commande de l'utilisateur est une commande vocale de l'utilisateur reçue par le deuxième dispositif ou un mouvement du deuxième dispositif réalisé par l'utilisateur.

Ainsi, le deuxième dispositif dispose d'un microphone.

Avantageusement, au moins l'un des dispositifs parmi les premier et deuxième dispositifs est un dispositif intelligent.

Par « dispositif intelligent », ou « smart device » en anglais », on désigne tout dispositif apte à recevoir des données, à les traiter, et à décider, en fonction de ce traitement, d'effectuer ou non une action. Il s'agit de dispositifs munis de moyens de communications, généralement sans fil, et de processeurs, pour réaliser ces tâches. On peut également les appeler « dispositifs connectés ».

Avantageusement, au moins l'un des dispositifs parmi les premier et deuxième dispositif comprend un « assistant intelligent ».

Par « assistant intelligent », ou « assistant personnel intelligent », ou « assistant personnel virtuel », on désigne un agent logiciel effectuant des tâches au service d'un utilisateur. En l'espèce, cet agent logiciel génère l'émission lumineuse formée en fonction de la sollicitation. Il peut également être responsable de tout ou partie des autres tâches décrites, notamment la préparation du contenu de l'émission lumineuse et le traitement de la commande de l'utilisateur reçue en réponse à l'émission lumineuse. Cet agent peut être configuré pour effectuer d'autres tâches.

De préférence, le deuxième dispositif est un accessoire mettable par l'utilisateur.

Par « *accessoire* », on désigne un dispositif dont les dimensions et le poids le rendent facilement mobile et manipulable par un utilisateur.

Par « *accessoire mettable* »*,* on désigne un accessoire qu'un utilisateur peut porter sans avoir à effectuer une action particulière, par exemple sans le maintenir activement entre ses mains pour le maintenir en position. On parle en particulier d'un accessoire dont l'utilisateur peut s'équiper. En particulier, il s'agit d'un accessoire disposant de moyens de fixation sur l'utilisateur, par exemple une broche ou un bracelet, ou dont la forme lui permet d'être porté sans action, par exemple une bague portée autour d'un doigt. On peut également parler d'accessoire « *enfilable* », ou « *vestimentaire* »*.* Ce dispositif couvre notamment le domaine de « *l'habitronique* » et est souvent désigné par la locution « *wearable device*» en anglais. On peut considérer que l'adjectif « *mettable* » est équivalent à ceux de « *portable* » ou « *portatif* » uniquement dans la limite d'un accessoire pouvant être porté sans effort actif de l'utilisateur.

Avantageusement, le premier dispositif est un smartphone.

Ainsi, il s'agit en particulier du smartphone de l'utilisateur. Plutôt que de transmettre la sollicitation directement à l'utilisateur, via une information graphique ou sonore par exemple, le smartphone transmet la sollicitation au deuxième dispositif pour que ce dernier génère une émission lumineuse portant sur cette sollicitation.

Alternativement, le premier dispositif est un accessoire mettable par l'utilisateur ou par un autre utilisateur.

Dans ce mode de réalisation, le premier dispositif est donc porté par l'utilisateur ou un autre utilisateur et transmet la sollicitation et transmet la sollicitation au deuxième dispositif. Des dispositifs, par exemple des accessoires mettables, peuvent ainsi fonctionner en réseau. La sollicitation peut être transmise d'un dispositif à l'autre sous la forme d'un signal radio, par exemple Bluetooth, infrarouge, LiFi, voire d'une émission lumineuse telle que décrit précédemment. Dans ce dernier cas, les dispositifs peuvent communiquer ensemble par un langage formé d'émissions lumineuses.

On prévoit également selon l'invention un procédé de génération d'une émission lumineuse, mis en œuvre dans un dispositif de communication par émission lumineuse, le procédé comprenant les étapes suivantes :
- réception, par des moyens de communication sans fil du dispositif, d'une sollicitation destinée à un utilisateur,
- une émission lumineuse formée en fonction de la sollicitation ayant été préparée, génération de l'émission lumineuse, par un émetteur de lumière du dispositif, à l'intention de l'utilisateur,
- réception, par des moyens de réception d'une commande du dispositif, d'une commande de l'utilisateur en réponse à l'émission lumineuse.

On prévoit également selon l'invention un programme d'ordinateur comprenant des instructions qui, lorsque le programme est exécuté par un ordinateur, conduisent celui-ci à mettre en œuvre les étapes de l'un ou l'autre des procédés décrits plus haut.

On prévoit également selon l'invention un support d'enregistrement lisible par ordinateur comprenant des instructions qui, lorsqu'elles sont exécutées par un ordinateur, conduisent celui-ci à mettre en œuvre les étapes de l'un ou l'autre des procédés décrits plus haut.

On prévoit également selon l'invention une plateforme d'applications, mettant à disposition d'un dispositif, par téléchargement, le programme introduit plus haut mettant en œuvre le procédé introduit plus haut de génération d'une émission lumineuse par le dispositif, ou le programme introduit encore plus haut mettant en œuvre, par le premier dispositif, le procédé introduit plus haut de communication par émission lumineuse avec un utilisateur.

On prévoit également selon l'invention un dispositif de communication par émission lumineuse, comprenant :
- des moyens de communication sans fil, par exemple une antenne wifi ;
- un émetteur de lumière pour générer une émission lumineuse, par exemple au moins une diode électroluminescente ;
- des moyens de réception d'une commande d'un utilisateur, par exemple un accéléromètre, un gyroscope ou un microphone ;
   le dispositif étant configuré pour mettre en œuvre les étapes du deuxième dispositif du procédé décrit plus haut.

De préférence, le dispositif comprend également un capteur de fréquence cardiaque.

Ainsi, le dispositif permet de mesurer des fréquences cardiaques et des variations de fréquence cardiaque de l'utilisateur. Le dispositif peut être configuré pour envoyer des émissions lumineuses ou ne pas en envoyer en fonction de ces mesures. De même, des éléments sur l'attention ou le stress généré par des émissions lumineuses passées sont déduites, en vue de la génération de prochaines émissions lumineuses.

Avantageusement, le dispositif comprend en outre au moins l'un des éléments suivants :
- des moyens d'émission/réception d'ondes infrarouges ;
- des moyens d'émission/réception d'ondes LiFi ;
- un récupérateur d'énergie piézoélectrique.

Les moyens d'émissions d'ondes infrarouges et/ou LiFi permettent de communiquer avec d'autres dispositifs, en particulier dans des espaces dépourvus d'accès au réseau Internet. Le dispositif peut donc en particulier recevoir une sollicitation d'un autre dispositif sous la forme d'ondes infrarouges ou LiFi. Le LiFi permet des débits de donnés élevés, une large bande passante, et une sécurité accrue car la lumière ne traverse généralement pas les obstacles solides. Au sein des ondes infrarouges, les ondes SWIR, pour « *Short-wavelength infrared* »*,* soit « *ondes co urtes infrarouges* », sont avantageuses en ce qu'elles exploitent une bande passante large et sont moins sujettes aux interférences que d'autres types d'ondes. Les transmissions de type SWIR sont également plus sécurisées et adaptées à la communication dans des conditions de faible luminosité.

Le récupérateur piézoélectrique permet de récupérer l'énergie provenant de l'utilisateur portant le dispositif et notamment de ses mouvements.

On prévoit également selon l'invention un bijou comprenant un dispositif tel que décrit précédemment et destiné à être mis par l'utilisateur, dans lequel l'émetteur de lumière comprend une diode électroluminescente associée à au moins une gemme en matériau cristallin.

Ainsi, l'utilisateur tire bénéfice du fait qu'il n'a pas à ajouter un dispositif supplémentaire sur lui-même : le bijou fait office de dispositif de communication par émission lumineuse, tout en conservant sa fonction conventionnelle esthétique et/ou symbolique.

Par « diode électroluminescente », on désigne de préférence une LED (pour « *light-emitting diode* »)*.* Elle permet de générer efficacement et économiquement l'émission lumineuse. La LED peut également servir à la communication LiFi ou infrarouge, ou à d'autres types de communication par lumière. En effet, la modulation de l'intensité lumineuse d'une LED peut être réalisée très rapidement, à des fréquences imperceptibles à l'œil humain.

Par « gemme », on désigne toute pierre de joaillerie, naturelle ou de synthèse, connue dans le domaine de la joaillerie. Le bijou se présente ainsi, de l'extérieur, comme un bijou classique aux yeux de l'utilisateur et des personnes tierces. Cette gemme en matériau cristallin permet, en plus l'effet esthétique et/ou symbolique conventionnel des bijoux, de diffuser à l'intention du porteur de bijou la lumière émise par la diode. Ainsi, lorsque l'émission lumineuse est générée, c'est, du point de vue extérieur, le bijou qui émet la lumière au niveau de la gemme, ce qui permet une expérience utilisateur esthétique et intéressante en plus d'être fonctionnelle et efficace.

Ce matériau cristallin a de préférence un indice de réfraction élevé pour favoriser la diffusion de l'émission lumineuse, ainsi que des propriétés optiques mécaniques, thermiques et diélectriques adaptées à la communication par émission lumineuse au sein d'un dispositif porté par l'utilisateur. Parmi les matériaux remplissant ces critères, on trouve le diamant de synthèse, mono ou polycristallin, formé par un procédé dit « HPHT » (pour « haute pression haute température) ou CVD (pour *« chemical vapor deposition* », dépôt chimique en phase vapeur en français). Il peut également s'agir de corindon (saphir ou rubis synthétique), de spinelle synthétique, d'alexandrite synthétique, de moissanite, de zircon, de cristal de grenat d'yttrium aluminium.

Avantageusement, la gemme est en diamant de synthèse obtenu par dépôt chimique en phase vapeur.

Ainsi, le dispositif tire profit des propriétés de ce matériau, décrites ci-après.

Le diamant de synthèse obtenu par CVD dispose de propriétés diélectriques remarquables, notamment une constante diélectrique basse de 5.7, une tangente de perte inférieure à 0.00005 à 145 Ghz et une haute résistance diélectrique de 1 000 000 V/cm, ce qui est particulièrement pertinent dans le cadre d'un dispositif de communication disposant de moyens électroniques et notamment de moyens de communication sans fil. En particulier, cela facilite la transmission des communications sans fil.

Le diamant de synthèse obtenu par CVD présente une conductivité thermique, de 20 à 25 W/cmK, extrêmement élevée. Il dispose d'une température de Debye de 2220 K en considérant une vitesse du son de 17 500 m/s. Cela lui confère des propriétés de dissipation thermiques très intéressantes, en particulier en rapport avec les moyens électroniques du dispositif, d'autant que le dispositif a vocation à être porté par l'utilisateur, en particulier en contact avec la peau de l'utilisateur.

Le diamant de synthèse obtenu par CVD peut être taillé et serti dans un chaton de façon à être intégré facilement dans un logement prévu à cet effet, offrant un effet visuel recherché à l'utilisateur.

Ce matériau présente également une transparence à bande large, de l'ultraviolet au lointain infrarouge. Cela fait de lui un matériau polyvalent en ce qui concerne les différents modes de communication possibles, notamment si le dispositif dispose de moyens de communication par LiFi ou infrarouge et typiquement pour la communication par ondes SWIR.

Ce matériau dispose également d'une excellente vélocité acoustique (17 500 m/s), intéressante en cas de présence sur le dispositif de moyens de réception de commandes vocales.

De préférence, la gemme comprenant une partie haute comprenant une couronne et une table, destinée à diffuser l'émission lumineuse à l'intention de l'utilisateur et une partie formant pavillon et située sous la couronne, le bijou comprend également :
- une lentille prenant forme autour du pavillon ;
- un guide de lumière reliant la diode à la lentille.

Ainsi, le guide dirige la lumière vers la matière cristalline de la gemme à l'endroit souhaité, par exemple de manière centrée. Cela permet d'optimiser la diffusion de la lumière dans la gemme, en particulier si la diode est excentrée vis-à-vis de cette gemme. Le guide permet aussi de diriger la lumière d'une seule diode dans plusieurs gemmes si nécessaire.

La lentille est par exemple une lentille de Fresnel formé d'un film en polymère microstructuré rainuré. Elle peut être réalisée par impression 3D. Alternativement, la lentille est une lentille de diffusion formant un film permettant de mettre en évidence le facettage de la gemme ou de créer un motif projeté par l'émission lumineuse. Ces guides de lumière et lentilles permettent non seulement d'ajouter des effets visuels, mais permettent aussi d'optimiser la propagation de la lumière et des couleurs de la diode LED dans la gemme de manière à ce que la réfraction de la gemme elle-même et de la lumière incidente soient préservées, diffusées de façon homogène, voire amplifiées en fonction de l'environnement.

Avantageusement, le bijou forme une bague comprenant :
- un anneau muni d'un orifice traversant,
- un module électronique de contrôle et d'alimentation de la diode,
- le module, la diode et la gemme étant insérés dans l'orifice traversant de manière à ce qu'un doigt de l'utilisateur inséré dans l'anneau soit situé sous le module, la diode et la gemme.

Ainsi, l'orifice traversant, dans lequel est logé la gemme, la diode et le module, permet un bon fonctionnement radio-fréquence, en particulier si l'anneau est métallique, en formant, grâce à la gemme, une fenêtre transparente vers l'extérieur de l'anneau. Cet agencement évite l'effet de la Cage de Faraday.

En particulier, lorsque le matériau de la gemme est du diamant par CVD, l'orifice dans l'anneau permet une vitesse de propagation, de réflexion et de transmission des ondes encore améliorée du fait de la faible permittivité diélectrique de ce matériau.

Alternativement, le bijou forme une bague comprenant :
- un anneau muni d'un orifice traversant,
- un module électronique de contrôle et d'alimentation de la diode,
- la diode et la gemme étant insérés dans l'orifice traversant de manière à ce qu'un doigt de l'utilisateur inséré dans l'anneau soit situé sous la diode et la gemme,
- le module électronique de contrôle et d'alimentation s'étendant dans au moins une portion de l'anneau dépourvue de l'orifice traversant.

Ainsi, le module de contrôle et d'alimentation s'étend « en ruban » dans l'anneau. L'avantage de la forme « en ruban » est qu'elle rend les éléments électroniques plus discrets qu'en « sandwich » aux yeux d'un tiers. Ainsi, la bague dont le module de contrôle et d'alimentation s'étend « en ruban » ressemble encore plus à une bague traditionnelle.

On prévoit également un bijou comprenant :
- une diode électroluminescente ;
- une gemme en matériau cristallin, la gemme comprenant une partie formant couronne et destinée à diffuser une émission lumineuse de la diode ;
- un module d'alimentation et de contrôle de la diode,
- un orifice traversant, dans lequel le module, la diode et la gemme sont au moins en partie logés.

De préférence, le module s'étend également dans au moins une portion de l'anneau dépourvue de l'orifice traversant.

On prévoit également un émetteur d'émission lumineuse comprenant :
- une diode électroluminescente ;
- une gemme en matériau cristallin, la gemme comprenant une partie formant couronne et destinée à diffuser une émission lumineuse de la diode, la gemme comprenant aussi une partie formant pavillon et située sous la couronne ;
- une lentille prenant forme autour du pavillon ;
- un guide de lumière reliant la diode à la lentille.

On prévoit également un procédé de filtrage de sollicitation d'un utilisateur, comprenant les étapes suivantes :
- À partir d'une base d'apprentissage comprenant :
   ** des sollicitations passées, émises par un dispositif principal, destinées à un utilisateur,
   ** des données définissant un contexte de ces sollicitations, et
   ** des commandes passées de l'utilisateur au dispositif principal en réponse à ces sollicitations,
   apprentissage, par un modèle d'intelligence d'artificielle, de critères de filtrage de sollicitations destinées à l'utilisateur en fonction des données définissant le contexte ;
- réception par le dispositif principal d'une sollicitation émise par un dispositif secondaire ;
- filtrage de la sollicitation à partir de l'apprentissage réalisé, de manière à émettre ou non, par le dispositif principal, la sollicitation à destination de l'utilisateur.

Avantageusement, lequel la sollicitation émise par le dispositif principal est formée par une émission lumineuse.

On prévoit également un procédé de préparation d'un contenu d'une émission lumineuse, le contenu de l'émission lumineuse comprenant un motif et au moins une teinte de l'émission lumineuse, le motif étant composé d'une ou plusieurs luminosités et/ou saturations de l'émission lumineuse évoluant dans le temps

Le procédé comprenant les étapes suivantes :
- à partir d'une base d'apprentissage comprenant :
   ** des contenus d'émissions lumineuses passées, émises par un dispositif principal, destinées à un utilisateur,
   ** des sollicitations passées correspondantes aux contenus,
   ** des données définissant un contexte de ces sollicitations,
   ** des commandes passées de l'utilisateur au dispositif principal en réponse aux émissions,
- apprentissage, par un modèle d'intelligence d'artificielle, de contenus d'émissions lumineuses permettant de susciter l'attention de l'utilisateur et/ou de diminuer le stress de l'utilisateur en fonction des sollicitations et des données définissant les contextes ;
- réception par le dispositif principal d'une sollicitation émise par un dispositif secondaire ;
- préparation du contenu d'une émission lumineuse, à émettre par le dispositif principal, à partir de l'apprentissage réalisé.

### Brève description des figures

L'invention sera mieux comprise à la lecture de la description qui va suivre donnée uniquement à titre d'exemple et faite en se référant aux dessins annexés dans lesquels :
[Fig.1] est une vue schématique d'un système selon un mode de réalisation de l'invention ;
[Fig.2] est un schéma d'un bijou du système de la [Fig.1] selon un mode de réalisation de l'invention ;
[Fig.3] est un schéma de composants du bijou de la [Fig.2] ;
[Fig.4] est un schéma de moyens optiques du bijou de la [Fig.2], en vue latérale ;
[Fig.5] est un schéma des moyens optiques du bijou de la [Fig.2], en perspective ;
[Fig.6] est un schéma des moyens optiques d'un bijou selon un autre mode de réalisation, en perspective ;
[Fig.7] est un schéma d'un procédé de communication par émission lumineuse;

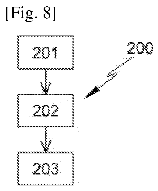

[Fig.8] est un schéma d'un procédé génération d'une émission lumineuse.

### Description détaillée

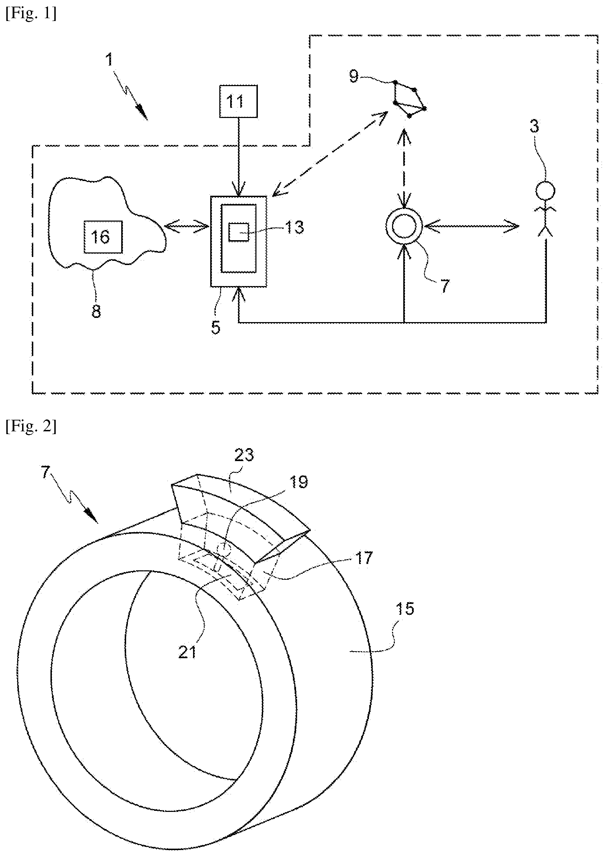

On a représenté sur la [Fig.1] un système 1 de communication par émission lumineuse. Il est destiné à permettre de solliciter un utilisateur 3 par des émissions lumineuses conformément à des procédés 100 et 200 décrits plus bas. Ce système 1 comprend un premier dispositif 5 sous la forme d'un smartphone conventionnel. Il comprend un deuxième dispositif 7 sous la forme d'un bijou intelligent apte à communiquer par émission lumineuse. Il comprend une plateforme CLOUD 8. Enfin, il comprend également un réseau maillé 9 d'autres dispositifs intelligents. Est également représenté sur cette [Fig.1], hors système 1, un magasin d'applications mobiles 11 (« *app store* ») où sont hébergées des applications à destination du premier et du deuxième dispositif. Alternativement, il pourrait s'agir de deux magasins d'applications distincts, l'un hébergeant les applications pour le premier dispositif 5, l'autre pour le deuxième dispositif 7.

Le smartphone 5 est conventionnel. Il est donc muni de moyens de communications sans fil et d'un microprocesseur conventionnels, et de moyens de stockage de données conventionnels. Il dispose en mémoire d'une application mobile 13 téléchargée depuis le magasin d'applications 11. Ces éléments lui permettent de mettre en œuvre la partie qui le concerne du procédé 100 décrit plus bas. En particulier, le smartphone 5 joue le rôle d'intermédiaire, via l'application mobile 13, entre la plateforme CLOUD 8 et le bijou intelligent 7.

L'application mobile 13 comporte sous forme enregistrée un programme d'ordinateur 14 comprenant des instructions qui, lorsqu'elles sont exécutées par un ordinateur, ici par un processeur du smartphone 5, conduisent celui-ci à mettre en œuvre les étapes du procédé 100 décrit plus bas.

La plateforme CLOUD 8 présente une infrastructure CLOUD de type AWS (pour « *Amazon Web Services* »)*.* Elle présente des moyens d'entraînement, notamment un processeur, d'un modèle d'intelligence artificielle 63 qui, entraîné à partir des commandes passées de l'utilisateur 3 en réponse à des émissions lumineuses correspondantes passées générées par le bijou 7 et à partir des sollicitations correspondantes passées envoyées par le smartphone 5, détermine et affine des critères de filtrage de sollicitations en fonction du contexte de ces sollicitations, afin de décider de les soumettre à l'utilisateur 3 ou non. Plus précisément, la plateforme CLOUD 8 fait appel à un réseau de neurones artificiels. L'architecture de ce réseau de la plateforme 8 est celle d'un « transformeur ». Une autre architecture pourrait être choisie. Par simplicité, on se réfère dans la description au modèle d'intelligence artificielle en désignant uniquement le modèle 63 stocké par le firmware 61 du smartphone 5. En pratique, le modèle d'intelligence artificielle est issu de la combinaison du réseau de neurones stocké dans le firmware 61 et du réseau de neurones de la plateforme CLOUD 8.

Ce modèle 63 détermine et affine également le contenu des émissions lumineuses à générer par le bijou 7 à l'intention de l'utilisateur 3 également en fonction de ces éléments. Ce modèle est mis à jour régulièrement par la plateforme à l'application 13 du smartphone 5 qui le transfert au firmware 61, évoqué plus bas, du bijou 7. De manière plus générale, la plateforme 8 est configurée pour recevoir des données émises par le smartphone 5, ces données émanant régulièrement du bijou 7, et pour les traiter sur des serveurs. Une fois le traitement terminé, les résultats de son traitement sont envoyées à l'application 13 du smartphone 5 et éventuellement transférés au bijou 7. Les résultats fournis peuvent être des prédictions, des classifications, des analyses, ou toute autre sortie spécifique à la tâche assignée à un modèle d'intelligence artificielle. La plateforme 8 communique avec l'application mobile 13 du smartphone 5. Cette plateforme 8 comprend donc des moyens de communication, en particulier des moyens de communication par Internet. Chaque nouveau retour de l'utilisateur 3, récupéré par le bijou 7, est transmis à la plateforme CLOUD 8 par l'application 13 du smartphone 5 pour mettre à jour le modèle d'intelligence artificielle par la plateforme cloud 8. La plateforme CLOUD 8 comprend également des appels à des API (pour « *Application Interface Programming* ») de services tiers de manière à permettre de générer des émissions lumineuses par le bijou 7 en fonction d'applications tierces.

La plateforme 8 comprend sous forme enregistrée un programme d'ordinateur 16 comprenant des instructions qui, lorsqu'elles sont exécutées par un ordinateur, ici par la plateforme, conduisent celui-ci à mettre en œuvre les étapes du procédé 100 décrit plus bas.

Le réseau maillé 9 représente un ou plusieurs dispositifs tiers communiquant avec le smartphone 5 et/ou le bijou 7. Il peut s'agir de smartphones conventionnels, d'autres bijoux intelligents dotés, comme le bijou 7, d'émetteurs de lumière pouvant générer des émissions lumineuses conformes aux procédés 100 et 200 décrits plus bas, ou d'autres appareils quelconques ayant vocation à communiquer avec l'un des dispositifs du système.

Le bijou connecté 7 est illustré de manière schématique aux figures 2 à 5. Il forme une bague.

Cette bague 7 comprend un anneau métallique 15 muni d'un orifice traversant 17. Alternativement, l'anneau pourrait être dans un autre matériau composite, par exemple en céramique.

Cette bague 7 comprend, dans l'orifice 17, une diode électroluminescente 19 de type LED. La diode 19 est apte à générer une émission lumineuse. Cette émission lumineuse est colorée, le terme de « coloré » incluant le noir et le blanc. La diode peut 19 peut générer une émission changeant de couleur. La diode 19 est apte à émettre des ondes LiFi ou infrarouges, en particulier des ondes SWIR. Alternativement, elle pourrait n'émettre que des ondes lumineuses conventionnelles. En variante, la bague peut présenter plusieurs diodes.

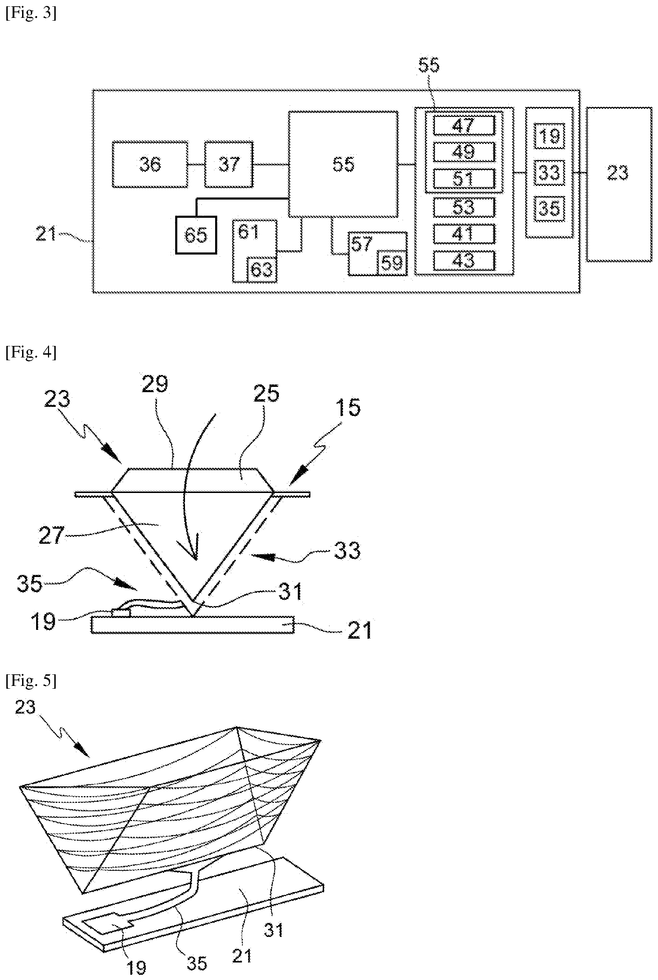

La bague 7 comprend également dans l'orifice traversant 17 une gemme 23 en diamant de synthèse obtenu par dépôt chimique en phase vapeur (ou CVD pour « *chemical vapor deposition* » en anglais). Alternativement, la gemme pourrait être faite d'un autre matériau cristallin. Cette gemme 23 comprend une partie haute, comprenant une couronne 25 et une table 29, destinée à diffuser l'émission lumineuse à l'intention de l'utilisateur 3 et une partie formant pavillon 27 et située sous la couronne 25. Comme illustré aux figures 4 et 5, ces deux parties se confondent au niveau de l'extrémité extérieure de l'anneau 15. La couronne 23 a une forme de parallélépipède rectangle dont la table 29, formant l'extrémité supérieure de la gemme 23 et dépassant de l'anneau 15, est plus petite que l'aire occupée par le parallélépipède au niveau de la surface extérieure de l'anneau 15. Le pavillon 27 a une forme de prisme triangulaire orienté de sorte que l'une de ses arêtes forme l'extrémité inférieure 31 de la gemme 23 au sein de l'orifice 17. La bague 7 comprend également une lentille 33 prenant forme autour du pavillon 27, c'est-à-dire occupant ses parois latérales. Il s'agit d'une lentille dite « de Fresnel » réalisée en film en polymère microstructuré rainuré. Alternativement, il peut s'agir d'une lentille réalisée dans un film ou matériau quelconque. La bague 7 comprend également un conduit formant guide de lumière 35 reliant la diode 19 au milieu de l'extrémité inférieure 31 de la gemme 23, de manière à optimiser la diffusion de la lumière émise par la diode 19 au sein de la gemme 23.

La gemme 23, associée à la diode 19, forme ainsi un émetteur de lumière de la bague 7 permettant de générer des émissions lumineuses à destination de l'utilisateur 3.

Alternativement, la bague 7 pourrait présenter plusieurs gemmes. Dans ce cas chaque gemme pourrait être associée à une ou plusieurs diodes, ou à l'inverse, une diode pourrait être associée à plusieurs gemmes. L'anneau pourrait alors présenter plusieurs orifices, comprenant chacun les éléments décrits ci-avant.

Alternativement également, la gemme 23 pourrait être faite d'un autre matériau. Il est cependant avantageux que le matériau présente des caractéristiques diélectriques similaires à celles du diamant de synthèse obtenu par CVD, pour favoriser les communications sans fil, des caractéristiques optiques similaires pour favoriser la diffusion de l'émission lumineuse, des caractéristiques thermiques similaires pour favoriser l'intégration du module, de la diode, et le confort de l'utilisateur, ainsi que des caractéristiques acoustiques similaires pour favoriser la réception de commandes vocales.

Alternativement, la gemme 23 pourrait avoir toute autre forme. En outre, elle pourrait être dépourvue de pavillon, comme les gemmes de taille « rose » (ou « rosecut » en anglais).

La bague 7 comprend également dans l'orifice traversant 17 un module électronique 21 de contrôle et d'alimentation de la diode 19, apte à alimenter la diode et à déclencher l'émission lumineuse conformément à un contenu déterminé et en fonction de données à traiter. Ce module 21 prend la forme d'un circuit imprimé flexible s'étendant dans l'orifice 17. Il comprend une batterie 36 pour alimenter les composants. Ce module ne se limite pas au contrôle et à l'alimentation de la diode 19 mais alimente et contrôle également les composants décrits ci-après. Le module 21 comprend un capteur de mouvement 37 comportant un accéléromètre et un gyroscope, pour identifier des mouvements prédéterminés du bijou 7 formant commandes de la part de l'utilisateur 3, un microphone 41 de type MEMS (pour « Micro-Electro-Mechanical System ») associé à un pré-amplificateur, pour réceptionner des commandes vocales de l'utilisateur 3, et un haut-parleur 43 pour d'éventuelles sollicitations vocales par le bijou à l'intention de l'utilisateur 3. Ce module 21 comprend également un capteur 65 de fréquence cardiaque, permettant de mesurer la fréquence cardiaque de l'utilisateur 3 portant la bague 7. Ce module 21 comprend également des moyens de communications sans fil 45 comportant une antenne radio 47 configurée pour communiquer par Bluetooth avec un autre dispositif. Elle pourrait être configurée pour fonctionner selon un autre protocole. Ces moyens 45 comprennent également un dispositif 49 d'émission/réception d'ondes infrarouges, apte à communiquer en ondes SWIR, et un dispositif 51 d'émission/réception d'ondes LiFi. Ces dispositifs 49 et 51 sont associés à la LED 19 pour l'émission de ces ondes, en particulier pour moduler les émissions. Dans une variante, ces dispositifs sont distincts de la LED 19 et disposent de leurs propres émetteurs. Ce module 21 comprend également un récupérateur d'énergie piézoélectrique 53 pour récupérer de l'énergie issu du corps de l'utilisateur 3 portant le bijou 7 et/ou des mouvements du bijou 7 et pour stocker cette énergie dans la batterie 36.

Ce module 21 comprend enfin un microcontrôleur 55 pour commander l'ensemble des éléments décrits. Ce microcontrôleur 55 est associé à une mémoire 57 de forme conventionnelle, comportant sous forme enregistrée un programme d'ordinateur 59 comprenant des instructions qui, lorsqu'elles sont exécutées par un ordinateur, ici par le microcontrôleur 55, conduisent celui-ci à mettre en œuvre les étapes des procédés 100 et 200 décrits plus bas. Ce programme est téléchargé depuis le magasin d'applications 11 ou depuis un support d'enregistrement quelconque comportant le programme.

Le microcontrôleur 55 communique avec un « firmware » 61 contenant un modèle d'intelligence artificielle 63 mis à jour régulièrement par la plateforme CLOUD 8. Un firmware est un « micrologiciel », ou « microprogramme », qu'on peut également appeler « logiciel interne » ou « logiciel embarqué », formé par un programme intégré dans un matériel informatique et correspondant à une couche basse, en particulièrement inférieure à la couche applicative conventionnelle, selon le modèle OSI. Il est ici intégré au circuit imprimé du module 21. Le modèle 63 d'intelligence artificielle permet de traiter les sollicitations reçues conformément aux procédés 100 et 200 décrits plus bas.

Le modèle 63, stocké par le firmware 61, est un réseau de neurones artificiels. L'architecture est de type « *MobileNets* »*.* Ce type de réseaux neuronaux convolutifs et pré-entrainés est particulièrement adapté aux dispositifs « *mettables* »*.* Cette architecture pourrait toutefois être différente. Comme évoqué plus haut, il communique avec un réseau de neurones de la plateforme CLOUD 8.

L'apprentissage du modèle 63, évoqué plus bas, est une combinaison d'apprentissage profond (« deep learning » en anglais ») et d'apprentissage par renforcement (« reinforcement learning »)

Le firmware 61 intègre également des bibliothèques logicielles nécessaires à l'exécution du modèle 63 d'intelligence artificielle. En particulier, ce modèle 63 d'intelligence artificielle permet de filtrer localement les sollicitations à émettre ou non sous forme d'émission lumineuse à l'intention de l'utilisateur 3 en fonction de critères de filtrage appris par le modèle 63, de traiter localement l'élaboration du contenu de l'émission lumineuse à générer et de traiter les retours de l'utilisateur 3 par commande vocale ou mouvement du bijou 7. Cette gestion locale permet d'améliorer la vitesse de traitement, la confidentialité des données et réduire la dépendance à une connexion Internet. La couche logicielle d'intelligence artificielle peut également gérer l'optimisation de l'énergie de la bague 7 ou effectuer d'autres tâches assignées. Alternativement, tout ou partie de cette couche peut être intégrée à la plateforme CLOUD 8 et/ou au smartphone 5.

Tout ou partie des couches logicielles décrites, intégrées au bijou, peuvent être considérées comme formant un « assistant intelligent ».

Le module 21, la diode 19 et la gemme 23 sont insérés dans l'orifice traversant 17 de manière à ce qu'un doigt de l'utilisateur 3 inséré dans l'anneau 15 soit situé sous le module 21, la diode 19 et la gemme 23.

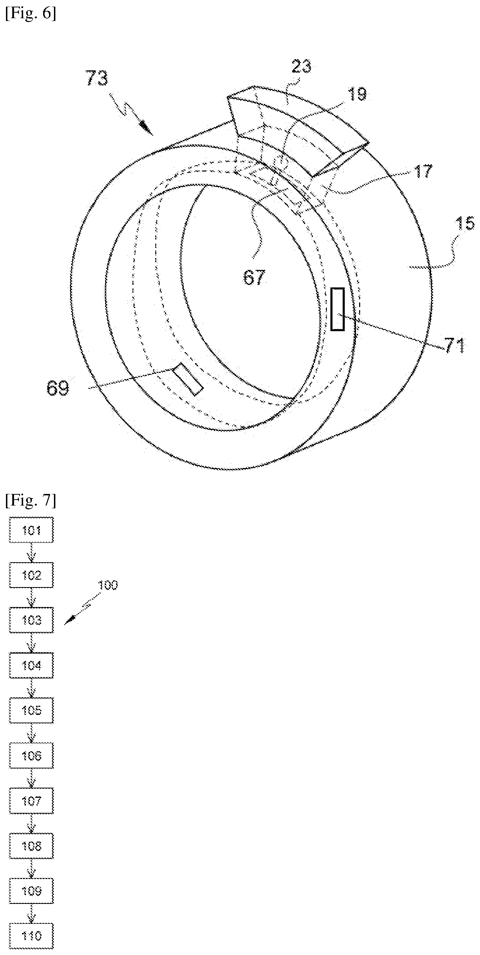

La [Fig.6] illustre, de façon schématique, un autre mode de réalisation de la bague. Elle est référencée par le numéro 73. Cette bague intelligente 73 diffère de la bague 7 uniquement en ce qui concerne son module de contrôle et d'alimentation 67. En effet, au lieu de présenter l'intégralité de ses éléments empilés dans l'orifice traversant 17 comme le module 21 de la bague 7, le module 67 comprend une batterie 69 et un capteur de fréquence cardiaque situés au sein de l'anneau 15 de la bague 73.

En variante, tout ou partie des autres éléments du module 21, tels que le microphone, le dispositif d'émission d'ondes infrarouges, le capteur de mouvements, pourraient également être situés dans l'anneau 15 de la bague 73.

En d'autres termes, le module 67 d'alimentation et de contrôle s'étend « en ruban » dans l'anneau 15, dans des portions de l'anneau 15 dépourvues de l'orifice traversant 17, alors que le module 21, de la bague 7, intégralement logé dans l'orifice 17, est en forme de « sandwich ». L'avantage de la forme « en ruban » est qu'elle rend les éléments électroniques plus discrets qu'en « sandwich » aux yeux d'un tiers, où les éléments s'empilant en-dessous de la gemme rendent la tête de la bague 7 massive. Ainsi, la bague 73 ressemble encore plus à une bague traditionnelle que la bague 7.

L'ensemble de ces éléments, du premier comme du second mode de réalisation, ou de toute combinaison possible de ces modes, mettent en œuvre le procédé 100 décrit ci-après. Par simplicité, on décrit ce procédé en faisant référence à la bague 7.

Les premières étapes sont des étapes préalables au cœur du procédé.

À l'étape 101, l'application mobile 13 dédiée est téléchargée depuis le magasin d'application 11 et installée sur le smartphone 5.

À l'étape 102, le smartphone 5 est appairé, via ses moyens et à travers l'application mobile 13, à la bague intelligente 7. Par « appairage », ou « pairing » an anglais, on désigne l'opération permettant à deux dispositifs d'ouvrir une connexion sans fils entre eux, après une étape de co-identification, de manière à échanger des données entre eux par la suite. La communication entre le smartphone 5 et la bague 7, établie par appairage, est mise en œuvre par Bluetooth.

À l'étape 103, l'utilisateur 3 indique, par l'application mobile 13 de son smartphone 5, des préférences concernant la manière dont les émissions lumineuses doivent être générées par le bijou 7. Il s'agit notamment de définir, pour des sollicitations concernant des appels ou des messages, des personnes dites prioritaires, c'est-à-dire pour lesquelles des émissions lumineuses doivent être générées à l'intention de l'utilisateur 3 même si l'utilisateur est considéré comme occupé. Il s'agit également d'associer des motifs lumineux pour ces personnes, et/ou des teintes de couleur spécifiques, de manière à permettre à l'utilisateur 3 de cerner dès l'émission lumineuse quelle est la personne qui le sollicite. Il peut également s'agir de définir des catégories de sujets de messages et de les associer à des teintes particulières d'émission lumineuse, et/ou de définir des niveaux de priorité des sollicitations et de les associer à des motifs particuliers d'émission. Il peut également s'agir de définir des contenus d'émission lumineuse correspondant à un ou plusieurs mots-clefs. Ainsi, une teinte et / ou un motif peuvent correspondre à un ou des mots prédéterminés tels que « urgence » ou « découvert ».

Cette configuration est ensuite transmise au bijou connecté 7 de manière à mettre à jour le modèle 63 intégré à son firmware 61. Cette étape 103 est totalement optionnelle. Il est en effet possible de laisser une configuration par défaut générer les premières émissions tandis que le modèle 63 d'intelligence artificielle est mis à jour au fur et à mesure des réponses de l'utilisateur 3 à ces émissions.

À l'étape 104 débutent les étapes formant la communication par émission lumineuse visée. Une sollicitation est émise vers le smartphone 5, à l'intention de l'utilisateur 3. Il s'agit dans le présent exemple d'un message de type « sms ». Il est émis par un dispositif tiers non illustré, par exemple par un ami de l'utilisateur 3 qui n'est pas listé comme contact prioritaire. Alternativement, cette sollicitation pourrait être un appel reçu par smartphone 5 à destination de l'utilisateur 3 ou une notification du smartphone 5 à l'intention de l'utilisateur 3 et portant par exemple sur un événement, une localisation, un moment ou une activité. Tout autre type de sollicitation à l'intention de l'utilisateur 3 peut être envisagé.

À l'étape 105, au lieu de prévenir l'utilisateur, via une notification, un bruit ou un autre type de sollicitation directe, le smartphone 5 envoie cette sollicitation, c'est-à-dire le sms, par Bluetooth, au bijou intelligent 7. Cette sollicitation, c'est-à-dire le signal portant sur ce sms, est envoyée en parallèle à la plateforme CLOUD 8 qui l'enregistre en vue de mise à jour future du modèle d'intelligence artificielle et/ou d'un traitement particulier, par exemple une analyse ultérieure du contenu du message.

À l'étape 106, le bijou 7 réalise une étape de filtrage de la sollicitation, de manière à ce que l'émission lumineuse ne soit mise en œuvre que lorsqu'il est déterminé à l'étape de filtrage que la sollicitation est pertinente pour l'utilisateur 3. Les critères de filtrage sont déterminés par le modèle 63 d'intelligence artificielle entraîné sur la plateforme CLOUD 8 à partir des commandes passées de l'utilisateur 3 en réponse à des émissions lumineuses correspondantes passées et aux sollicitations correspondantes passées. Comme déjà mentionné, le modèle 63 est régulièrement mis à jour et communiqué au bijou 7.

Ainsi, le modèle d'intelligence artificielle 63 identifie, par entraînement, des sollicitations et/ou des contextes de sollicitations stressants pour l'utilisateur, de manière à identifier un ou des critères de filtrage de ces sollicitations, en particulier en fonction de réponses cardiaques et/ou de mouvements détectés de l'utilisateur 3 suites à des émissions lumineuses correspondantes passées. Le modèle d'intelligence artificielle 63 identifie donc des contextes durant lesquels certaines sollicitations ne doivent pas être transmises. À titre d'exemple, le modèle d'intelligence apprend qu'une notification d'une application bancaire concernant un découvert bancaire de l'utilisateur ne doit pas être transmise durant une réunion stratégique de l'utilisateur. Un autre exemple est que le modèle 63 apprend qu'aucune notification, ou un nombre restreint de notifications, doivent être transmises lors d'un contexte de conduite d'un véhicule.

Le modèle d'intelligence artificielle 3 propose, sur la base de ces éléments, une modération de la fréquence des émissions et une adaptation contextuelle, spécifique à l'utilisateur 3. Il apprend ensuite à améliorer ces critères de filtrage sur les nouvelles réponses de l'utilisateur, par exemple en identifiant si les changements comportements sont positifs au regard modèle comportemental de 'Fogg' ou d'un autre modèle de comportement prédéterminé. Il en résulte que le modèle d'intelligence artificielle 63 identifie, quantifie et qualifie en temps réels des déclencheurs de stress et l'impact de notifications sur un niveau de stress et les comportements de l'utilisateur qui en résultent.

Les critères de filtrage concernent par exemple l'un des éléments suivants :
- un type d'élément sur lequel porte la sollicitation, par exemple s'il s'agit d'un message, d'un appel, d'une notification. Il s'agit dans le présent exemple d'un sms.
- un contenu du message ou de la notification ;
- un moment de réception de la sollicitation par le bijou 7. En fonction de la sollicitation, le modèle 63 peut prévoir la génération de l'émission lumineuse à un moment plus propice.
- un lieu où se trouve le bijou 7. Ce lieu est identifié en particulier par le smartphone 5 qui communique avec le bijou 7. Alternativement, le bijou 7 lui-même pourrait disposer de moyens de géolocalisation.
- une activité en cours de l'utilisateur 3 identifiée par le bijou 7. Cette activité est identifiée par le bijou 7 en fonction de commandes de l'utilisateur 3 ou en fonction de données envoyées par le smartphone 5.

Cette liste est non limitative et d'autres critères de filtrage peuvent être établis. Les critères peuvent être choisis par l'utilisateur 3 ou appris par le modèle 63.

Dans le présent exemple, le sms a passé avec succès l'étape de filtrage.

Alternativement, cette étape de filtrage pourrait être réalisée par la plateforme 8 et/ ou le smartphone 5 via l'application 13. Le résultat serait transmis éventuellement au bijou 7.

À l'étape 107, le bijou 7 prépare le contenu de l'émission lumineuse, formée en fonction de la sollicitation reçue. Cette préparation est réalisée par le modèle d'intelligence artificielle 63 intégré au firmware 61 du bijou 7 et mis à jour régulièrement par la plateforme CLOUD 8. Dans le présent exemple, le modèle 63 attribue une catégorie au sms parmi les catégories suivantes : « social », « famille », « travail », « jeux et autres divertissements », « autres ». D'autres catégories pourraient être définies par l'utilisateur 3 ou apprises par le modèle. À la catégorie choisie correspond une teinte soit sélectionnée par l'utilisateur 3 à l'étape 103, soit prévue par défaut ou apprise par le modèle 63. Le modèle 63 attribue également un motif de l'émission lumineuse, c'est-à-dire une variation dans le temps de la saturation et/ou de la luminosité, en fonction du degré de priorité de la sollicitation. Ce motif est par exemple un clignotement plus ou moins rapide et plus ou moins prononcé, ou toute autre variation spécifique de saturation et/ou luminosité de l'émission lumineuse. Le degré de priorité dépend de nombreux critères, qui peuvent inclure les mêmes critères de contexte que ceux utilisés pour l'étape de filtrage, et/ou d'autres critères appris par le modèle. Il peut également s'agir de critères définis par l'utilisateur 3. En particulier, trois niveaux de priorités peuvent être prévus, un nombre qui permet à l'utilisateur de facilement retenir les motifs correspondants.

En particulier, le modèle d'intelligence artificielle 63 identifie, par entraînement, des contenus d'émissions lumineuses permettant de susciter l'attention de l'utilisateur 3, en particulier en fonction de réponses cardiaques et/ou de mouvements détectés de l'utilisateur 3 suite à des émissions lumineuses correspondantes passées. Ainsi, les combinaisons de teintes et motifs, des émissions lumineuses passées, sont intégrées à une base d'apprentissage et associées aux variations de fréquence cardiaques et mouvements de l'utilisateur 3, y compris sa réactivité, mesurées suite à ces émissions, de manière à ce que le modèle d'intelligence artificielle 63 apprenne à former des contenus d'émissions lumineuses qui améliorent la réactivité de l'utilisateur. Le modèle 63 apprend donc à moduler le stress de l'utilisateur 3, en identifiant un équilibre entre nécessité d'informer l'utilisateur 3 à certains moments et nécessité de ne pas stresser indûment l'utilisateur.

En variante, le contenu de l'émission lumineuse correspond à un ou plusieurs mots-clefs, là aussi appris par le modèle 63 par apprentissage.

Il est à noter que la combinaison de l'identification des facteurs de stress et des contenus permettant de susciter l'attention de l'utilisateur permet d'optimiser à la fois les contenus et les moments des émissions lumineuses. Cette combinaison permet notamment de proposer à l'utilisateur des modes de fonctionnement au choix, qui ne seront pas décrits plus en détail ici : par exemple un mode dit 'croisière' où l'objectif est en priorité de ne pas générer du stress chez l'utilisateur, et un mode 'performance ' où l'objectif est en priorité de susciter l'attention de l'utilisateur.

Alternativement, cette étape de préparation du contenu de l'émission lumineuse pourrait être réalisée par la plateforme CLOUD 8 et/ou par l'application 13.

À l'étape 108, le bijou 7 génère l'émission lumineuse préparée à l'étape 107, à l'intention de l'utilisateur 3. Ainsi, la diode 19 émet l'émission préparée, c'est-à-dire avec la teinte sélectionnée et conformément au motif de saturation/luminosité évoluant dans le temps déterminé. Cette émission est diffusée par la gemme 23 à l'intention de l'utilisateur 3.

À l'étape 109, l'utilisateur, qui a vu l'émission lumineuse générée par son bijou 7, en a compris son sens. Cette étape est alors la réception, par la bague 7, d'une commande de l'utilisateur 3 en réponse à l'émission lumineuse. Dans le présent exemple, l'utilisateur 3 a compris grâce à la teinte et au motif de l'émission, qu'il avait reçu un sms émanant d'un ami, ce sms étant associé par exemple à une priorité moyenne, ou de deuxième niveau parmi trois niveaux. Trouvant la sollicitation appropriée, c'est-à-dire pertinente à la fois dans le contexte présent, et dans son contenu, il choisit d'effectuer un « *tap* » avec son doigt portant la bague 7, c'est-à-dire un mouvement brusque vers le bas stoppé également brutalement, pour informer le bijou 7 de cette pertinence. Ce mouvement est généralement associé au fait que l'utilisateur 3 va prendre connaissance du sms sur le smartphone 5. Ce mouvement est identifié par l'accéléromètre et le gyroscope de la bague 7. Alternativement, l'utilisateur 3 aurait pu indiquer un niveau de pertinence parmi les deux autres niveaux suivants :
- émission non pertinente ;
- émission non pertinente de par le contexte durant lequel elle a été générée, le contexte étant par exemple défini par des données de moment et/ou de localisation et/ ou d'activité en cours de l'utilisateur.

D'autres types de retours sont possibles. L'utilisateur peut par exemple indiquer qu'il souhaite que le smartphone 5 supprime le sms reçu. L'utilisateur pourrait tout aussi bien formuler, par sa commande, une réponse à la sollicitation, la réponse étant destinée à l'expéditeur du sms, par exemple via un message prédéfini correspondant à un geste.

Le geste de l'utilisateur peut avoir été préalablement associé à une commande, ou cette association peut être apprise par le modèle d'intelligence artificielle 63 enregistré dans le firmware 61 du bijou 7.

Alternativement, la commande de l'utilisateur peut être vocale. Elle est alors réceptionnée par le microphone *MEMS* du bijou 7.

À l'étape 110, la commande de l'utilisateur effectuée en réponse à l'émission lumineuse, qu'elle soit gestuelle ou vocale, est communiquée par le bijou 7 au smartphone 5 via l'application 13, par Bluetooth. Le smartphone 5 transmet alors cette réponse à la plateforme CLOUD 8, qui l'enregistre et l'associe au sms enregistré au préalable.

À l'étape 111, la plateforme CLOUD 8 met à jour le modèle d'intelligence artificielle 63 sur la base de ces nouvelles données : la sollicitation initiale, le contenu de l'émission lumineuse formée, le retour de l'utilisateur. Le modèle mis à jour est ensuite envoyé au smartphone 5 qui le transfert au bijou 7. Le modèle prend donc en compte au fur et à mesure les retours de l'utilisateur 3 pour améliorer le filtrage des futures sollicitations et le contenu de ces sollicitations. Ce type de mise à jour peut être commandé ou intervenir à différents intervalles de temps, réguliers ou non.

On va maintenant décrire plusieurs modes alternatifs de mise en œuvre non illustrés de ce procédé appuyés sur le réseau maillé 9. Dans ces modes alternatifs, plusieurs dispositifs d'émissions lumineuses comprenant les moyens de la bague 7 peuvent être amenés à communiquer ensemble. Ces communications sont réalisées par Bluetooth, mais peuvent aussi être réalisées via les moyens de communication LiFi ou infrarouge décrits plus haut. Ces communications peuvent aussi être directement formées par les émissions lumineuses.

Dans le premier mode alternatif, le réseau maillé 9 comprend un ou plusieurs autres bijoux portés par l'utilisateur 3. Au moment de l'étape 102 d'appairage, le smartphone 5 détecte plusieurs bijoux via l'application 13. L'appairage peut alors être effectué avec un ensemble formé par ces bijoux, ou avec l'un de ces bijoux, lequel est à son tour appairé avec l'un des autres bijoux et ainsi de suite. Les bijoux peuvent être configurés pour agir différemment. Par exemple, les sollicitations professionnelles peuvent faire l'objet d'émissions par uniquement l'un des bijoux, tandis que les sollicitations personnelles sont traitées par un autre bijou. Dans un autre exemple, une même sollicitation peut être distribuée sur l'ensemble des bijoux appairés ou sur certains d'entre eux, résultant en une émission lumineuse, générée par plusieurs bijoux de façon coordonnée.

Dans un deuxième mode alternatif, le réseau maillé 9 est fermé, c'est-à-dire qu'il porte sur une entité bien délimitée, les dispositifs du réseau présentent des caractéristiques similaires, et il n'est pas ouvert à l'extérieur. Plusieurs utilisateurs portent des bijoux intelligents ou d'autres dispositifs dotés d'émetteurs de lumières aptes à générer des émissions conformément au procédés 100 et 200 décrits, appairés entre eux au sein du réseau maillé 9 fermé. Il est alors envisageable de mettre en place une configuration spécifique des émissions lumineuse. Par exemple, au sein d'une entreprise, une teinte peut correspondre à un département donné, tandis que le motif, c'est-à-dire la variation dans le temps de saturation/luminosité, peut correspondre à une situation spécifique du département. Les destinataires de l'entreprise voyant l'émission lumineuse, notamment sur leurs propres bijoux, comprennent donc qu'ils sont sollicités pour cette situation spécifique concernant ce département spécifique. Ce type de communication est particulièrement avantageux dans un cadre dit « no-phone », c'est-à-dire où l'usage de communication par téléphone est interdit ou limité. L'information-source formant la sollicitation initiale à destination des bijoux peut d'ailleurs être un dispositif autre qu'un smartphone. Le même type de configuration peut concerner une famille. Un contenu spécifique peut par exemple être associé à un message spécifique concernant un membre spécifique de la famille. À titre d'autre exemple non limitatif de sollicitation entre plusieurs bijoux au sein d'un réseau fermé, une émission lumineuse en rose avec un motif reproduisant un battement de cœur peut correspondre à un message envoyé par un partenaire amoureux.

Un troisième mode de mise en œuvre concerne le réseau maillé 9, mais cette fois ouvert à d'autres types de dispositifs non nécessairement dotés d'émetteurs de lumière conformes au procédés décrits. En particulier, d'autres objets connectés ou dits « intelligents » peuvent communiquer avec le dispositif décrit, par exemple avec la bague 7, pour autant qu'un langage ait été convenu. À titre d'exemple non limitatif, un bracelet médical, sans écran ni dispositif d'émission de lumière, porté par l'utilisateur, peut envoyer une sollicitation, concernant une donnée médicale de l'utilisateur, directement à la bague 7. La bague 7 filtre et génère le cas échéant une émission lumineuse portant sur cette sollicitation, à l'intention de l'utilisateur. La bague permet donc à l'utilisateur de prendre connaissance d'une donnée émise par le bracelet.

Dans ces modes de mise en œuvre, les dispositifs intelligents peuvent échanger entre eux sans qu'une sollicitation soit immédiatement générée par émission lumineuse. À titre d'exemple, un premier dispositif d'un utilisateur peut requérir d'un deuxième dispositif d'un autre utilisateur un rappel ultérieur d'une sollicitation, laquelle est renvoyée par le deuxième dispositif uniquement dans un contexte précis.

On rappelle que dans tous les modes de réalisation décrits, on met en œuvre un procédé 100 de communication par émission lumineuse avec un utilisateur, comprenant les étapes suivantes :
- par communication sans fil, envoi, d'un premier dispositif à un deuxième dispositif, d'une sollicitation destinée à l'utilisateur,
- préparation d'un contenu d'une émission lumineuse formée en fonction de la sollicitation,
- génération de l'émission lumineuse, par le deuxième dispositif, à l'intention de l'utilisateur,
- réception, par le deuxième dispositif, d'une commande de l'utilisateur en réponse à l'émission lumineuse.

Dès lors, on met en œuvre, dans un dispositif de communication par émission lumineuse tel que la bague 7, et en référence à la [Fig.7], un procédé 200 de génération d'une émission lumineuse, le procédé comprenant les étapes suivantes :
- une étape 201 de réception, par des moyens de communication sans fil du dispositif, d'une sollicitation destinée à un utilisateur,
- émission lumineuse formée en fonction de la sollicitation ayant été préparée, une étape 202 de génération de l'émission lumineuse, par un émetteur de lumière du dispositif, à l'intention de l'utilisateur,
- une étape 203 de réception, par des moyens de réception d'une commande du dispositif, d'une commande de l'utilisateur en réponse à l'émission lumineuse.

L'invention n'est pas limitée aux modes de réalisation présentés et d'autres modes de réalisation apparaîtront clairement à l'homme du métier.

En particulier, à la place de la bague 7, tout dispositif comprenant un émetteur de lumière et capable de générer une émission lumineuse conformément aux procédés décrits est concerné par l'invention. Parmi ces dispositifs, est avantageux tout dispositif « mettable » par l'utilisateur, c'est-à-dire dont l'utilisateur peut s'équiper sans avoir ensuite à maintenir le dispositif en position par un effort actif. Il peut s'agir, par exemple, de broches fixées sur un vêtement de l'utilisateur, voire de dispositifs intégrés au vêtement, d'accessoires enfilés par l'utilisateur ou portés, sur la tête, autour du cou ou de n'importe quelle manière évitant pour l'utilisateur d'avoir à fournir un effort, par exemple lui évitant d'avoir à maintenir le dispositif en serrant la main. Parmi les bijoux intégrant cet émetteur de lumière, comme la bague 7, tout bijou est envisageable. À titre d'exemples non limitatifs, le dispositif comprenant le module électronique 21 et la diode 23 peut être intégré à un collier, un bracelet, une parure, une boucle d'oreille, en associant ces éléments avec une gemme, qu'elle soit en matériau cristallin ou non.

Le smartphone 5 pourrait lui être remplacé par tout autre dispositif apte à envoyer des sollicitations au dispositif d'émission lumineuse. Il peut s'agir d'un ordinateur, d'une tablette, mais aussi de tout assistant dit « intelligent » intégré à un dispositif, portable ou non. Il pourrait également s'agir de n'importe quel dispositif d'une ville connectée, type NEOM. Comme déjà évoqué, il peut également s'agir d'un autre dispositif d'émission lumineuse. Dans un mode de réalisation où la plateforme 8 enverrait une information directement au bijou, c'est le serveur concerné de la plateforme qui joue le rôle du dispositif envoyant la sollicitation.

Comme déjà évoqué, le modèle d'intelligence artificielle peut être intégré au firmware du dispositif d'émission lumineuse, ou fonctionner uniquement sur la plateforme CLOUD ou encore sur l'application mobile. L'étape de filtrage et l'étape de formation du contenu de l'émission lumineuse peuvent donc être réalisées par le dispositif d'émission lumineuse ou par une autre entité.

### Liste de références

1 : système de communication par émission lumineuse
3 : utilisateur
5 : smartphone
7 : bague intelligente
8 : plateforme CLOUD
9 : réseau maillé
11 : magasin d'applications mobiles
13 : application mobile dédiée
14 : programme d'ordinateur
15 : anneau de la bague
16 : programme d'ordinateur
17 : orifice de l'anneau
19 : diode LED
21 : module électronique d'alimentation et de contrôle
23 : gemme
25 : couronne de la gemme
27 : pavillon de la gemme
29 : table de la gemme
31 : extrémité inférieure de la gemme
33 : lentille
35 : guide de lumière
36 : batterie
37 : capteur de mouvement
41 : microphone
43 : haut-parleur
45 : moyens de communication sans fils
47 : antenne radio
49 : dispositif d'émission
51 : dispositif d'émission/réception d'ondes LiFi
53 : récupérateur d'énergie piézoélectrique
55 : microcontrôleur
57 : mémoire
59 : programme d'ordinateur
61 : firmware
63 : modèle d'intelligence artificielle
65 : capteur de fréquence cardiaque
67 : module électronique d'alimentation et de contrôle
69 : batterie
71 : capteur de fréquence cardiaque
73 : bague intelligente
100 : procédé de communication par émission lumineuse avec un utilisateur
200 : procédé de génération d'une émission lumineuse mis en œuvre dans un dispositif

## Revendications

1. Procédé (100) de communication par émission lumineuse avec un utilisateur (3), comprenant les étapes suivantes :
- par communication sans fil, envoi (105), d'un premier dispositif (5) à un deuxième dispositif (7 ; 73), d'une sollicitation destinée à l'utilisateur (3),
- préparation (107) d'un contenu d'une émission lumineuse formée en fonction de la sollicitation, le contenu de l'émission lumineuse comprenant un motif et au moins une teinte de l'émission lumineuse, le motif étant composé d'une ou plusieurs luminosités et/ou saturations de l'émission lumineuse évoluant dans le temps, le motif et la ou les teintes étant déterminés par un modèle d'intelligence artificielle (63) entraîné à partir de commandes passées de l'utilisateur en réponse à des émissions correspondantes passés et aux sollicitations correspondantes passées,
- génération (108) de l'émission lumineuse, par le deuxième dispositif (7 ; 73), à l'intention de l'utilisateur (3),
- réception (109), par le deuxième dispositif (7 ; 73), d'une commande de l'utilisateur (3) en réponse à l'émission lumineuse.

2. Procédé (100) selon la revendication précédente, dans lequel la sollicitation concerne l'un des éléments suivants :
- un appel reçu par le premier dispositif (5) à l'intention de l'utilisateur (3) ;
- un message reçu par le premier dispositif (5) à l'intention de l'utilisateur (3) ;
- une notification du premier dispositif (5) à l'intention de l'utilisateur (3) et portant par exemple sur un événement, une localisation, un moment ou une activité.

3. Procédé (100) selon l'une quelconque des revendications précédentes, dans lequel le motif de l'émission lumineuse correspond à un degré de priorité de la sollicitation destinée à l'utilisateur (3).

4. Procédé (100) selon l'une quelconque des revendications précédentes, dans lequel la teinte correspond à une catégorie de sujets concernée par la sollicitation destinée à l'utilisateur (3).

5. Procédé (100) selon l'une quelconque des revendications précédentes, dans lequel la commande de l'utilisateur (3) indique un niveau de pertinence de l'émission lumineuse générée à son intention, de préférence un niveau de pertinence parmi les suivants :
- émission non pertinente ;
- émission pertinente ;
- émission non pertinente de par le contexte durant lequel elle a été générée, le contexte étant par exemple défini par des données de moment et/ou de localisation et/ou d'activité en cours de l'utilisateur.

6. Procédé (100) selon la revendication précédente, dans lequel la commande de l'utilisateur est une commande vocale de l'utilisateur (3) reçue par le deuxième dispositif (7 ; 73) ou un mouvement du deuxième dispositif (7 ; 73) réalisé par l'utilisateur (3).

7. Procédé (100) selon la revendication précédente, dans lequel le deuxième dispositif (7 ; 73) est un accessoire mettable par l'utilisateur (3).

8. Procédé (100) selon l'une quelconque des revendications précédentes, dans lequel le premier dispositif (5) est un smartphone.

9. Procédé de génération (200) d'une émission lumineuse, mis en œuvre dans un dispositif (7 ; 73) de communication par émission lumineuse, le procédé comprenant les étapes suivantes :
- réception (201), par des moyens de communication sans fil (45, 47, 49, 51) du dispositif (7 ; 73), d'une sollicitation destinée à un utilisateur,
- une émission lumineuse formée en fonction de la sollicitation ayant été préparée, génération (202) de l'émission lumineuse, par un émetteur de lumière (19) du dispositif (7 ; 73), à l'intention de l'utilisateur (3), le contenu de l'émission lumineuse comprenant un motif et au moins une teinte de l'émission lumineuse, le motif étant composé d'une ou plusieurs luminosités et/ou saturations de l'émission lumineuse évoluant dans le temps, le motif et la ou les teintes étant déterminés par un modèle d'intelligence artificielle (63) entraîné à partir de commandes passées de l'utilisateur en réponse à des émissions correspondantes passés et aux sollicitations correspondantes passées,
- réception (203), par des moyens de réception (37, 41) d'une commande du dispositif (7 ; 73), d'une commande de l'utilisateur (3) en réponse à l'émission lumineuse.

10. Programme d'ordinateur (14, 16, 59) comprenant des instructions qui, lorsque le programme est exécuté par un ordinateur, conduisent celui-ci à mettre en œuvre les étapes du procédé (100) selon l'une quelconque des revendications précédentes.

11. Support d'enregistrement lisible par ordinateur comprenant des instructions qui, lorsqu'elles sont exécutées par un ordinateur, conduisent celui-ci à mettre en œuvre les étapes du procédé (100) selon l'une quelconque des revendications 1 à 9.

12. Plateforme d'applications (11), mettant à disposition d'un dispositif (7 ; 73), par téléchargement, le programme (59) de la revendication 10 mettant en œuvre le procédé (200) de génération d'une émission lumineuse de la revendication 9 dans le dispositif (7 ; 73), ou le programme (59) de la revendication 10 mettant en œuvre, par le premier dispositif du procédé (100) de communication lumineuse avec un utilisateur de l'une quelconque des revendications 1 à 8, le procédé (100) de communication lumineuse avec un utilisateur de l'une des revendications 1 à 8.

13. Dispositif (7 ; 73) de communication par émission lumineuse, comprenant :
- des moyens (45, 47, 49, 51) de communication sans fil, par exemple une antenne Bluetooth ;
- un émetteur de lumière (19, 23) pour générer une émission lumineuse, par exemple au moins une diode électroluminescente ;
- des moyens de réception d'une commande d'un utilisateur, par exemple un accéléromètre, un gyroscope ou un microphone (41) ;
le dispositif (7) étant configuré pour mettre en œuvre les étapes du deuxième dispositif du procédé (100) selon l'une quelconque des revendications 1 à 9.

14. Bijou (7 ; 73) comprenant un dispositif selon la revendication 13 et destiné à être mis par l'utilisateur (3), dans lequel l'émetteur de lumière (19, 23) comprend une diode électroluminescente (19) associée à au moins une gemme (23) en matériau cristallin.

15. Bijou (7 ; 73) selon la revendication précédente, dans lequel, la gemme (23) comprenant une partie haute comprenant une couronne (25) et une table (29), destinée à diffuser l'émission lumineuse à l'intention de l'utilisateur (3) et une partie formant pavillon (27) et située sous la couronne (25), le bijou comprend également :
- une lentille (33) prenant forme autour du pavillon (27) ;
- un guide de lumière (35) reliant la diode (19) à la lentille (33).

## Patentansprüche

1. Verfahren (100) zur Kommunikation mit einem Benutzer (3) mittels Lichtemission, das folgende Schritte umfasst:
- durch drahtlose Kommunikation, Senden (105) von einer ersten Vorrichtung (5) an eine zweite Vorrichtung (7; 73) einer Aufforderung, die für den Benutzer (3) bestimmt ist,
- Vorbereiten (107) eines Inhalts einer Lichtemission, die entsprechend der Aufforderung gebildet wird, wobei der Inhalt der Lichtemission ein Muster und mindestens einen Farbton der Lichtemission aufweist, wobei das Muster aus einer oder mehreren Helligkeiten und/oder Sättigungen der Lichtemission besteht, die sich im Laufe der Zeit ändern, wobei das Muster und der Farbton oder die Farbtöne durch ein künstliches Intelligenzmodell (63) bestimmt werden, das anhand früherer Befehle des Benutzers als Reaktion auf entsprechende frühere Lichtemissionen und entsprechende frühere Aufforderungen trainiert wurde,
- Erzeugen (108) der Lichtemission für den Benutzer (3), durch die zweite Vorrichtung (7; 73)
- Empfangen (109), durch die zweite Vorrichtung (7; 73), eines Befehls des Benutzers (3) als Reaktion auf die Lichtemission.

2. Verfahren (100) nach dem vorhergehenden Anspruch, wobei die Aufforderung eines der folgenden Elemente betrifft:
- einen von der ersten Vorrichtung (5) für den Benutzer (3) empfangenen Anruf;
- eine von der ersten Vorrichtung (5) für den Benutzer (3) empfangene Nachricht;
- eine Benachrichtigung der ersten Vorrichtung (5) an den Benutzer (3), die sich beispielsweise auf ein Ereignis, einen Ort, einen Zeitpunkt oder eine Aktivität bezieht.

3. Verfahren (100) nach einem der vorstehenden Ansprüche, wobei das Muster der Lichtemission einem Prioritätsgrad der Aufforderung an den Benutzer (3) entspricht.

4. Verfahren (100) nach einem der vorstehenden Ansprüche, wobei der Farbton einer Kategorie von Themen entspricht, die von der Aufforderung an den Benutzer (3) betroffen sind.

5. Verfahren (100) nach einem der vorstehenden Ansprüche, wobei der Befehl des Benutzers (3) einen Relevanzgrad der für ihn erzeugten Lichtemission angibt, vorzugsweise einen der folgenden Relevanzgrade:
- irrelevante Emission;
- relevante Emission;
- aufgrund des Kontexts, in dem sie erzeugt wurde, irrelevante Emission, wobei der Kontext beispielsweise durch Daten zum Zeitpunkt und/oder zum Ort und/oder zur aktuellen Aktivität des Benutzers definiert ist.

6. Verfahren (100) nach dem vorhergehenden Anspruch, wobei der Befehl des Benutzers ein Sprachbefehl des Benutzers (3) ist, der von der zweiten Vorrichtung (7; 73) empfangen wird, oder eine Bewegung der zweiten Vorrichtung (7; 73), die vom Benutzer (3) ausgeführt wird.

7. Verfahren (100) nach dem vorhergehenden Anspruch, wobei die zweite Vorrichtung (7; 73) ein vom Benutzer (3) tragbares Zubehörteil ist.

8. Verfahren (100) nach einem der vorhergehenden Ansprüche, wobei die erste Vorrichtung (5) ein Smartphone ist.

9. Verfahren (200) zum Erzeugen einer Lichtemission, das in einer Vorrichtung (7; 73) zur Kommunikation durch Lichtemission durchgeführt wird, wobei das Verfahren die folgenden Schritte umfasst:
- Empfangen (201), durch drahtlose Kommunikationsmittel (45, 47, 49, 51) der Vorrichtung (7; 73), einer für einen Benutzer bestimmten Aufforderung,
- eine Lichtemission, die entsprechend der vorbereiteten Aufforderung gebildet wird, Erzeugen (202) der Lichtemission durch einen Lichtemitter (19) der Vorrichtung (7; 73) für den Benutzer (3), wobei der Inhalt der Lichtemission ein Muster und mindestens einen Farbton der Lichtemission aufweist, wobei das Muster aus einer oder mehreren Helligkeiten und/oder Sättigungen der Lichtemission besteht, die sich im Laufe der Zeit ändern, wobei das Muster und der Farbton oder die Farbtöne durch ein künstliches Intelligenzmodell (63) bestimmt werden, das anhand früherer Befehle des Benutzers als Reaktion auf entsprechende frühere Emissionen und entsprechende frühere Aufforderungen trainiert wurde,
- Empfangen (203), durch Empfangsmittel (37, 41), eines Befehls der Vorrichtung (7; 73) eines Befehls des Benutzers (3) als Reaktion auf die Lichtemission.

10. Computerprogramm (14, 16, 59) mit Anweisungen, die, wenn das Programm von einem Computer ausgeführt wird, diesen veranlassen, die Schritte des Verfahrens (100) gemäß einem der vorstehenden Ansprüche auszuführen.

11. Computerlesbares Aufzeichnungsmedium mit Befehlen, die, wenn sie von einem Computer ausgeführt werden, diesen veranlassen, die Schritte des Verfahrens (100) gemäß einem der Ansprüche 1 bis 9 auszuführen.

12. Anwendungsplattform (11), die einer Vorrichtung (7; 73) durch Herunterladen das Programm (59) aus Anspruch 10 zur Durchführung des Verfahrens (200) zur Erzeugung einer Lichtemission aus Anspruch 9 in der Vorrichtung (7; 73) zur Verfügung stellt, oder das Programm (59) gemäß Anspruch 10, das durch die erste Vorrichtung des Verfahrens (100) zur Lichtkommunikation mit einem Benutzer gemäß einem der Ansprüche 1 bis 8 das Verfahren (100) zur Lichtkommunikation mit einem Benutzer gemäß einem der Ansprüche 1 bis 8 zur Verfügung stellt.

13. Vorrichtung (7; 73) zur Kommunikation durch Lichtemission, umfassend:
- Mittel (45, 47, 49, 51) zur drahtlosen Kommunikation, beispielsweise eine Bluetooth-Antenne;
- einen Lichtemitter (19, 23) zur Erzeugung einer Lichtemission, beispielsweise mindestens eine Leuchtdiode;
- Mittel zum Empfangen eines Befehls eines Benutzers, beispielsweise einen Beschleunigungsmesser, ein Gyroskop oder ein Mikrofon (41);
wobei die Vorrichtung (7) konfiguriert ist, die Schritte der zweiten Vorrichtung des Verfahrens (100) gemäß einem der Ansprüche 1 bis 9 auszuführen.

14. Schmuckstück (7; 73) mit einer Vorrichtung gemäß Anspruch 13, das vom Benutzer (3) getragen werden soll, wobei der Lichtemitter (19, 23) eine Leuchtdiode (19) aufweist, die mit mindestens einem Edelstein (23) aus kristallinem Material verbunden ist.

15. Schmuckstück (7; 73) gemäß dem vorhergehenden Anspruch, wobei der Edelstein (23) einen oberen Teil mit einer Krone (25) und einer Tafel (29) aufweist, der dazu bestimmt ist, die Lichtemission für den Benutzer (3) zu streuen, sowie einen Teil, der einen Pavillon (27) bildet und sich unter der Krone (25) befindet, wobei das Schmuckstück außerdem aufweist:
- eine Linse (33), die um den Pavillon (27) herum angeordnet ist;
- einen Lichtleiter (35), der die Diode (19) mit der Linse (33) verbindet.

## Claims

1. Method (100) for communicating by light emission with a user (3), comprising the following steps:
- by wireless communication, sending (105), from a first device (5) to a second device (7; 73), a request intended for the user (3),
- preparing (107) a content of a light emission formed depending on the request, the content of the light emission comprising a pattern and at least one hue of the light emission, the pattern being composed of one or more lightnesses and/or saturations of the light emission changing over time, the pattern and the one or more hues being determined by an artificial intelligence model (63) trained using commands passed by the user in response to corresponding emissions passed and to the corresponding requests passed,
- generating (108), using the second device (7; 73), the light emission intended for the user (3),
- receiving (109), using the second device (7; 73), a command from the user (3) in response to the light emission.

2. Method (100) according to the preceding claim, wherein the request concerns one of the following elements:
- a call received by the first device (5) intended for the user (3);
- a message received by the first device (5) intended for the user (3);
- a notification from the first device (5) intended for the user (3) and concerning, for example, an event, a location, a moment or an activity.

3. Method (100) according to any one of the preceding claims, wherein the pattern of the light emission corresponds to a degree of priority of the request intended for the user (3).

4. Method (100) according to any one of the preceding claims, wherein the hue corresponds to a category of subjects concerned by the request intended for the user (3).

5. Method (100) according to any one of the preceding claims, wherein the command from the user (3) indicates a level of relevance of the light emission generated for the user, preferably a level of relevance from amongst the following:
- non-relevant emission;
- relevant emission;
- non-relevant emission due to the context during which it was generated, the context being for example defined by current moment and/or location and/or activity data of the user.

6. Method (100) according to the preceding claim, wherein the user's command is a voice command of the user (3) received by the second device (7; 73) or a movement of the second device (7; 73) performed by the user (3).

7. Method (100) according to the preceding claim, wherein the second device (7; 73) is an accessory that can be worn by the user (3).

8. Method (100) according to any one of the preceding claims, wherein the first device (5) is a smartphone.

9. Method (200) for generating a light emission, implemented in a device (7; 73) for communicating by light emission, the method comprising the following steps:
- receiving (201), using wireless communication means (45, 47, 49, 51) of the device (7; 73), a request intended for a user,
- a light emission formed according to the request having been prepared, generating (202) the light emission using a light emitter (19) of the device (7; 73), intended for the user (3), the content of the light emission comprising a pattern and at least one hue of the light emission, the pattern being composed of one or more lightnesses and/or saturations of the light emission changing over time, the pattern and the one or more hues being determined by an artificial intelligence model (63) trained using commands passed by the user in response to corresponding emissions passed and to the corresponding requests passed,
- receiving (203), using receiving means (37, 41), a command from the device (7; 73), a command from the user (3) in response to the light emission.

10. Computer program (14, 16, 59), comprising instructions which, when the program is executed by a computer, instruct the computer to implement the steps of the method (100) according to any one of the preceding claims.

11. Computer-readable storage medium, comprising instructions which, when they are executed by a computer, instruct the computer to implement the steps of the method (100) according to any one of claims 1 to 9.

12. Application platform (11), providing for a device (7; 73), by downloading, the program (59) of claim 10 implementing the method (200) for generating a light emission of claim 9 in the device (7; 73), or the program (59) of claim 10 implementing, using the first device of the method (100) for communicating by light with a user of any one of claims 1 to 8, the method (100) for communicating by light with a user of one of claims 1 to 8.

13. Device (7; 73) for communicating by light emission, comprising:
- wireless communication means (45, 47, 49, 51), for example a Bluetooth antenna;
- a light emitter (19, 23) to generate a light emission, for example at least one light-emitting diode;
- means for receiving a command from a user, for example an accelerometer, a gyroscope or a microphone (41), the device (7) being configured to implement the steps of the second device of the method (100) according to any one of claims 1 to 9.

14. Jewel (7; 73) comprising a device according to claim 13 and intended to be worn by the user (3), wherein the light emitter (19, 23) comprises a light-emitting diode (19) associated with at least one gem (23) made of crystalline material.

15. Jewel (7; 73) according to the preceding claim, wherein, the gem (23) comprising a top part comprising a crown (25) and a table (29), intended to diffuse the light emission intended for the user (3) and a part forming pavilion (27) and located under the crown (25), the jewel also comprises:
- a lens (33) formed around the pavilion (27);
- a light guide (35) connecting the diode (19) to the lens (33).
